# EUROPÄISCHE PATENTSCHRIFT

(11) **EP 1 599 682 B1**
(45) Veröffentlichungstag und Bekanntmachung des Hinweises auf die Patenterteilung: **27.09.2006**
(21) Anmeldenummer: 04790720.9
(22) Anmeldetag: 21.10.2004
(51) Int. Cl.: F16D 69/04

(54) **BELAGTRÄGERPLATTE UND VERFAHREN ZU DEREN HERSTELLUNG**
LINING SUPPORT PLATE AND ASSOCIATED PRODUCTION METHOD
PLAQUE SUPPORT DE GARNITURE ET PROCEDE DE PRODUCTION DE CETTE PLAQUE

(30) Priorität: 30.10.2003 DE 10350725
(43) Veröffentlichungstag der Anmeldung: 30.11.2005
(73) Patentinhaber: TMD Friction Services GmbH, 51381 Leverkusen (DE)
(72) Erfinder: HEIDER, Carsten, 51399 Burscheid (DE); MONTERO BAUTISTA, Cristóbal, 45327 Essen (DE); ECKERT, Armin, 45731 Waltrop (DE)
(74) Vertreter: Müller, Eckhard
(86) Internationale Anmeldenummer: PCT/EP2004/011915
(87) Internationale Veröffentlichungsnummer: WO 2005/042999

(56) Entgegenhaltungen:
- DE-U1- 29 804 619
- GB-A- 2 303 891
- US-A- 4 799 579

## Beschreibung

Die Erfindung betrifft ein Verfahren zum Herstellen einer Belagträgerplatte. Ferner betrifft die Erfindung eine Belagträgerplatte mit einer Metallguß-Grundplatte mit einer Trägerfläche zur Aufnahme einer Reibbelagmasse, wobei aus der Trägerfläche Halteelemente hervorstehen.

Brems- bzw. Kupplungsbeläge bestehen üblicherweise aus einer Trägerplatte mit einer aufgepreßten Reibbelagmasse. Zur Verbesserung der Haftung zwischen der Trägerplatte und der Reibbelagmasse wird vielfach vor dem Aufpressen der Reibbelagmasse ein Kleber auf die Trägerplatte aufgetragen. Bei diesem Kleber handelt es sich in der Regel um einen Kleber auf einer Phenolharzbasis. Ggf. kann zwischen dem Kleber und der Reibbelagmasse noch eine Underlayer-Masse angeordnet werden, die beim Bremsvorgang auftretende Schwingungen dämpft. Die Trägerplatte besteht bei derartigen Brems- bzw. Kupplungsbelägen aus Stahl. Nachteilig bei dem üblichen Aufbau eines Brems- bzw. Kupplungsbelags ist zum einen, dass der Kleber oftmals den beim Bremsen in dem Reibbelag auftretenden hohen Temperaturen und Scherkräften nicht standhält. Dies führt unter Umständen zu einer Ablösung der Reibbelagmasse von der Trägerplatte und damit zu einer Zerstörung des Brems- bzw. Kupplungsbelags. Zum anderen ist das Gewicht einer derartigen Anordnung aufgrund des bei der Herstellung der Trägerplatte verwendeten Stahls recht hoch.

Um das Problem des den hohen Temperaturen und Scherkräften nicht standhaltenden Klebers zu lösen, sind Reibbeläge entwikkelt worden, bei denen die Verbindung zwischen der Trägerplatte und der Reibbelagmasse verbessert wurde. So können beispielsweise Löcher in die Trägerplatte eingebracht werden. Diese können beim Verpressen mit Reibbelagmasse gefüllt werden. So wird eine den Scherkräften besser standhaltende Verbindung zwischen der Reibbelagmasse und der Trägerplatte erzeugt. Beispielsweise ist es bekannt, in der dem Reibbelag zugewandten Fläche der Trägerplatte durch Laserstrahlen eine Mehrzahl von Vertiefungen einzubringen, wobei ein Teil des aus den Vertiefungen entfernten Materials am Rand dieser aufgeworfen wird.

Darüber hinaus ist es bekannt, Halteelemente auf der der Reibbelagmasse zugewandten Seite der Trägerplatte zu erzeugen. Dies kann geschehen, indem die Halteelemente entweder aus dem Trägerplattenmaterial herausgearbeitet werden, beispielsweise in Form einer Einkerbung und/oder einer Spananhebung, oder indem die Halteelemente auf die Trägerplatte aufgebracht werden, beispielsweise in der Form von aufgeschweißten oder aufgesinterten Gittern oder Stiften.

Die oben genannten Verfahren zur Verbesserung der Verbindung zwischen der Trägerplatte und der Reibbelagmasse sind jedoch nicht geeignet, das Gewicht eines Reibbelags zu reduzieren, da alle Verfahren auf einer Trägerplatte aus Stahl basieren.

Aufgabe der vorliegenden Erfindung ist es, gewichtsreduzierte Reibbeläge mit einer verbesserten Verbindung zwischen einer Reibbelagmasse und einer Belagträgerplatte bereitzustellen.

Diese Aufgabe wird erfindungsgemäß durch ein Verfahren zum Herstellen einer Belagträgerplatte mit den Merkmalen des Anspruchs 1 bzw. durch eine Belagträgerplatte mit den Merkmalen des Anspruchs 5 bzw. durch ein Verfahren zum Herstellen eines Reibbelags mit den Merkmalen des Anspruchs 9 bzw. durch einen Reibbelag mit den Merkmalen des Anspruchs 10 gelöst.

Eine Belagträgerplatte wird erfindungsgemäß hergestellt, indem
a) ein Trägerplattenmodell bereitgestellt wird, wobei das Trägerplattenmodell an einer Seitenfläche, die der einem Reibbelag zugewandten Fläche der Trägerplatte entspricht, mehrere Ausnehmungen aufweist, in welche jeweils ein Stift derart eingebracht wird, daß der Stift zum Teil aus dem Trägerplattenmodell herausragt;
b) das Trägerplattenmodell und die aus dem Modell herausragenden Abschnitte der Stifte von einer Formmasse umschlossen werden,
   die Formmasse verdichtet und/oder gehärtet wird,
   das Trägerplattenmodell aus der gehärteten und/oder verdichteten Formmasse derart entnommen wird, daß die Stifte mit den aus dem Trägerplattenmodell herausragenden Abschnitten in der Formmasse verbleiben und ein Trägerplattengießhohlraum gebildet wird, in welchen die Stifte hineinragen;
c) eine Schmelze in den Trägerplattengießhohlraum gegossen wird, wobei die in den Trägerplattengießhohlraum hineinragenden Abschnitte der Stifte von der Schmelze umschlossen werden;
d) die Schmelze derart erstarren gelassen wird, daß eine Eisenguß-Belagträgerplatte gebildet wird; und
e) die Belagträgerplatte aus der Form entnommen wird.

Unter einem Stift soll hier jeglicher Körper verstanden werden, der sich über eine gegebene Länge derart erstreckt, daß er über einen Teil dieser Länge in einer Ausnehmung des Belagträgerplattenmödells lösbar einbringbar ist, beispielsweise ein beliebiger zumindest teilweise zylindrisch- oder kegelförmig geformter Körper.

Durch die Verwendung einer Schmelze, die zu einer Eisenguß-Trägerplatte erstarrt, wird eine Gewichtsreduzierung der Belagträgerplatte erreicht. Dies ist ein zunehmend wichtiger Aspekt zur Herstellung von Reibbelägen, da die Automobilindustrie bemüht ist, das gesamte Gewicht ihrer Fahrzeuge zu verringern, um deren Kraftstoffverbrauch zu senken. Ferner bedingt die Gewichtsreduzierung der Belagträgerplatte eine Verminderung der Transportkosten.

Das Einbringen von Stiften bietet gegenüber einem Erzeugen von hervorspringenden Halteelementen aus dem Gußmaterial selbst (zum Beispiel durch Ausnehmungen in einer Formmasse aufgrund von Vorsprüngen eines Trägerplattenmodells, wie z.B. aus GB 2 303 891 bekannt) beim Gießen den Vorteil, daß das Material der eingegossenen Stifte so gewählt sein kann, daß die Stifte nicht abgeschert werden können und besser in der Belagträgerplatte verankert sind.

Das Einbringen der Stifte durch Umgießen vermeidet ferner Bearbeitungsschritte an der erkalteten Guß-Belagträgerplatte zur Schaffung von Halteelementen. Diese Bearbeitungsschritte erfordern einerseits zusätzliche Bearbeitungszeit und -kosten und gestalten sich andererseits bei Gußmaterialien schwieriger als bei Stahl.

Bei dem oben genannten Verfahren können die Ausnehmungen in dem Trägerplattenmodell mit einer Vielzahl unterschiedlicher Stifte versehen werden. So ist es möglich, die Art der Stifte, die in das Trägerplattenmodell eingebracht werden, innerhalb der mit den Ausnehmungen versehenen Fläche des Trägerplattenmodells zu variieren, um die Art und/oder Stärke der Verankerung in unterschiedlichen Bereichen der Trägerplatte zu steuern. Beispielsweise kann man in den Bereichen der Trägerplatte, die beim Bremsen besonders hohen Scherkräften unterworfen sind, Stifte mit besonders guten Verankerungseigenschaften zwischen Trägerplatte und Reibbelagmasse verwenden.

Vorteilhafterweise sind die in das Trägerplattenmodell eingebrachten Stifte derart ausgebildet, daß die aus dem Modell herausragenden Abschnitte der Stifte wenigstens einen sich zur Belagträgerfläche hin verjüngenden Abschnitt, d. h. wenigstens eine Hinterschneidung, aufweisen. Beim Verpressen der Reibbelagmasse mit den Hinterschneidungen aufweisenden Stiften wird so eine formschlüssige Verbindung zwischen der Reibbelagmasse und den Stiften der Trägerplatte geschaffen, die besonders zur Aufnahme der beim Bremsvorgang auftretenden Scherkräfte geeignet ist. Zusätzlich ist es möglich, die Anzahl und die Form der Hinterschneidungen aufweisenden Stifte an die in unterschiedlichen Bereichen der Trägerplatte herrschenden Scherkräfte anzupassen.

Besonders vorteilhaft ist es, wenn die in die Ausnehmungen des Trägerplattenmodells eingebrachten Abschnitte der Stifte zumindest teilweise eine Konturierung aufweisen, welche derart ausgebildet ist, daß die Stifte lösbar in das Trägerplattenmodell einbringbar sind. Unter einer Konturierung soll hier jede von einer glattwandigen zylinder- oder kegelförmigen Stiftform abweichende Oberflächengestaltung der Stiftabschnitte verstanden werden. Beispielsweise sind die Abschnitte der Stifte mit Nuten oder einem Gewinde versehen. Beim Eingießen der Schmelze in den Trägerplattengießhohlraum werden diese in den Trägerplattengießhohlraum hineinragenden Abschnitte der Stifte von der Schmelze umschlossen. Dadurch wird eine besonders gute Verankerung der Stifte in der Trägerplatte erreicht.

Bei dem erfindungsgemäßen Verfahren ist es vorteilhaft, daß die Schmelze beim Erstarren einen Eisenguß mit Vermiculargraphit bildet. Die physikalischen Eigenschaften von Gußeisen mit Vermiculargraphit liegen zwischen denen eines Gußeisens mit Kugelgraphit und denen eines Gußeisens mit Lamellengraphit. Vorteilhafterweise ist einerseits die Festigkeit und Zähigkeit des Gußeisens mit Vermiculargraphit höher als bei Gußeisen mit Lamellengraphit und zum anderen die Schwingungsdämpfung besser als bei Gußeisen mit Kugelgraphit.

Zur Lösung der eingangs genannten Aufgabe wird ferner eine Belagträgerplatte mit einer Metallguß-Grundplatte mit einer Trägerfläche zur Aufnahme einer Reibbelagmasse, wobei aus der Trägerfläche Halteelemente hervorstehen und die Grundplatte aus Eisenguß hergestellt ist, vorgeschlagen, die dadurch gekennzeichnet ist, daß die Halteelemente Stifte sind, die in die Grundplatte bei deren Herstellung derart eingegossen werden, daß jeweils ein Abschnitt der Stifte aus der Trägerfläche der Grundplatte herausragt.

Weitere vorteilhafte und/oder bevorzugte Weiterbildungen der Erfindung sind in den Unteransprüchen gekennzeichnet.

Im folgenden wird die Erfindung anhand einer in der Zeichnung dargestellten bevorzugten Ausführungsform näher beschrieben. In der Zeichnung zeigt:
Figur 1 eine schematische Schnittansicht eines in einen Kasten eingelegten Trägerplattenmodells,
Figur 2 eine schematische Schnittansicht eines in einen Kasten eingelegten Trägerplattenmodells mit in dem Trägerplattenmodell eingebrachten Stiften, und
Figur 3 eine schematische Schnittansicht einer verdichteten und/oder gehärteten Formmasse mit in dieser angeordneten Stiften.

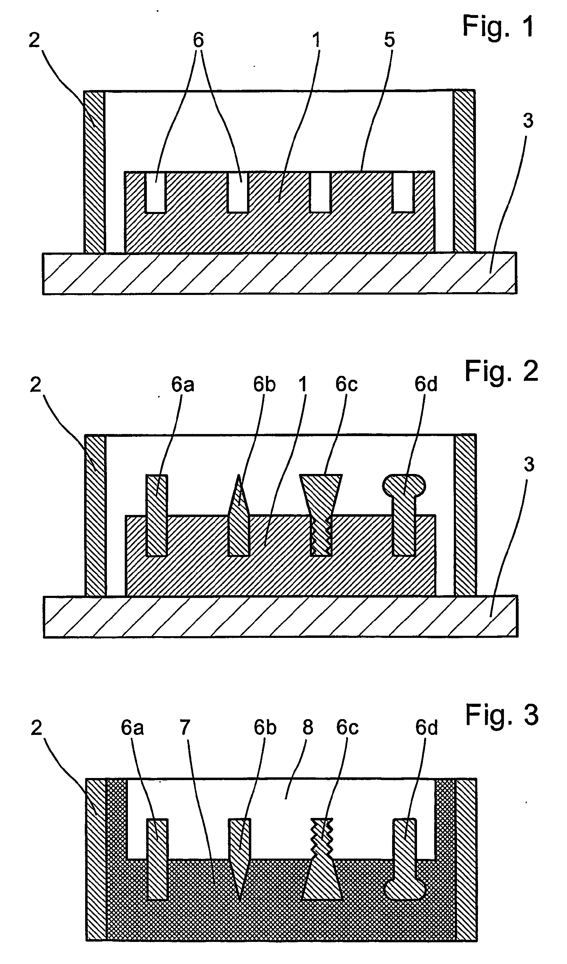

Figur 1 zeigt eine schematische Schnittansicht eines in einen Kasten 2 eingelegten Trägerplattenmodells 1. Das Trägerplattenmodell 1 und der Kasten 2 sind auf einer Modellplatte 3 angeordnet. Das Trägerplattenmodell 1 weist an der nach oben weisenden Seitenfläche 5 mehrere Ausnehmungen 4 auf. Die Ausnehmungen 4 können gleichmäßig über die Seitenfläche 5 verteilt sein, sie können jedoch auch in unterschiedlichen Teilbereichen unterschiedlich dicht verteilt angeordnet sein, wobei die Dichte von beim Bremsen örtlich wirkenden Scherkräften abhängig sein kann. Die Ausnehmungen 4 sind vorzugsweise Bohrungen gleichen Durchmessers (einfache Herstellung). Alternativ können die Ausnehmungen 4 in unterschiedlichen Bereichen der Seitenfläche 5 unterschiedliche Durchmesser aufweisen.

Figur 2 zeigt eine schematische Schnittansicht des in den Kasten 2 eingelegten Trägerplattenmodells 1 mit eingebrachten Stiften 6a-6d. Wie es schematisch in Figur 2 angedeutet ist, können die aus dem Trägerplattenmodell 1 herausragenden Abschnitte der Stifte 6a-6d unterschiedlich ausgebildet sein. Aus Gründen einfacher Herstellung sind die in den Ausnehmungen 4 eingebrachten Stifte jedoch vorzugsweise von gleicher Form und Größe. Die Stifte können als Kreiszylinder 6a oder als sich zum Ende des aus dem Trägerplattenmodells 1 ragenden Abschnitts verjüngende Zylinder 6d ausgebildet sein. Zur besseren Verankerung der Stifte 6a-6d in einer Reibbelagmasse können die aus dem Trägerplattenmodell 1 ragenden Abschnitte der Stifte Hinterschneidungen aufweisen oder können zumindest teilweise keulenförmig ausgebildet sein, wie dies bei den Stiften 6c und 6d angedeutet ist. Die in das Trägerplattenmodell 1 eintauchenden Abschnitte der Stifte 6a-6d können zylinderförmig mit glatter Wandung ausgebildet sein. Zur Herstellung einer besseren Verankerung im Guß weisen diese Abschnitte jedoch vorzugsweise eine Konturierung, d. h. beispielweise umlaufende Nuten oder ein umlaufendes Gewinde, auf, wie dies bei Stift 6c angedeutet ist.

Nachdem das Trägerplattenmodell 1 mit einer Mehrzahl von Stiften 6a-6d versehen wurde, wird eine Formmasse 7 auf das Trägerplattenmodell 1 aufgebracht. Anschließend wird die aufgebrachte Formmasse 7 verdichtet und/oder gehärtet. Dies kann beispielsweise durch Aufbringen von Druck auf die Formmasse erfolgen. Darüber hinaus ist es möglich, die Formmasse 7 durch Rütteln und/oder Erhitzen zu verdichten und/oder zu härten.

Nach dem Verdichten und/oder Härten der Formmasse 7 wird diese mit dem Kasten 2 und dem Trägerplattenmodell 1 entlang der Längsachse des Modells um 180° gedreht. Anschließend wird das Trägerplattenmodell 1 derart aus der Formmasse 7 entnommen, daß die in Figur 2 aus dem Trägerplattenmodell 1 herausragenden Abschnitte der Stifte 6a-6d in der Formmasse 7 verbleiben. Nach dem Entnehmen des Trägerplattenmodells aus der Formmasse 7 wird diese mit einer zweiten, vorgepreßten und/oder gehärteten Formmasse abgedeckt. Die Formmasse 7 und die zweite Formmasse bilden einen Trägerplattengießhohlraum 8. Die zweite Formmasse 7 weist zumindest einen Steiger und einen Einguß auf. In dem von der Formmasse 7 und der zweiten Formmasse gebildeten Trägerplattengießhohlraum 8 wird über den Einguß eine Schmelze eingegossen, wobei die in den Trägerplattenhohlraum 8 hineinragende Abschnitte der Stifte 6a-6d von der Schmelze umschlossen werden. In dem Trägerplattenhohlraum 8 befindliche und/oder bei dem Schmelzvorgang entstehende Gase können durch den Steiger entweichen.

In dem Trägerplattengießhohlraum wird die Schmelze nun derart erstarren gelassen, daß sich eine Eisenguß-Trägerplatte, vorzugsweise eine Eisenguß-Trägerplatte mit Vermiculargraphit, bildet. Nach dem Erstarren der Schmelze wird die Eisenguß-Trägerplatte aus der Gußform herausgelöst. Steiger und Einguß werden von der Eisenguß-Trägerplatte getrennt und noch anhaftende Formmasse wird beispielsweise durch ein Sandstrahlgebläse entfernt.

Im Rahmen des Erfindungsgedankens sind zahlreiche alternative Ausführungsformen denkbar. Beispielsweise kann ein Abdecken der Formmasse 7 durch eine zweite Form unterbleiben. Die Schmelze wird dann dosiert in die Formmasse 7 eingegossen. Eine Formgebung der nach oben nicht begrenzten Schmelze erfolgt durch die Schwerkraft.

## Patentansprüche

1. Verfahren zum Herstellen einer Belagträgerplatte,
wobei:
a) ein Trägerplattenmodell (1) bereitgestellt wird, wobei das Trägerplattenmodell (1) an einer Seitenfläche (5), die der einem Reibbelag zugewandten Fläche der Trägerplatte entspricht, mehrere Ausnehmungen (6) aufweist, in welche jeweils ein Stift (6a-6d) derart eingebracht wird, daß der Stift (6a-6d) zum Teil aus dem Trägerplattenmodell (1) herausragt;
b) das Trägerplattenmodell (1) und die aus dem Trägerplattenmodell (1) herausragenden Abschnitte der Stifte (6a-6d) von einer Formmasse (7) umschlossen werden,
die Formmasse (7) verdichtet und/oder gehärtet wird,
das Trägerplattenmodell (1) aus der gehärteten und/oder verdichteten Formmasse (7) derart entnommen wird, daß die Stifte (6a-6d) mit den aus dem Trägerplattenmodell (1) herausragenden Abschnitten in der Formmasse (7) verbleiben und ein Trägerplattengießhohlraum (8) gebildet wird, in welchen die Stifte (6a-6d) hineinragen;
c) eine Schmelze in den Trägerplattengießhohlraum (8) gegossen wird, wobei die in den Trägerplattengießhohlraum (8) hineinragenden Abschnitte der Stifte (6a-6d) von der Schmelze umschlossen werden;
d) die Schmelze derart erstarren gelassen wird, daß eine Eisenguß-Belagträgerplatte gebildet wird; und
e) die Belagträgerplatte aus der Form entnommen wird.

2. Verfahren nach Anspruch 1, wobei die in das Trägerplattenmodell (1) eingebrachten Stifte (6a-6d) derart ausgebildet sind, daß die aus dem Trägerplattenmodell (1) herausragenden Abschnitte der Stifte (6a-6d) Hinterschneidungen aufweisen.

3. Verfahren nach einem der Ansprüche 1 oder 2, wobei die in den Ausnehmungen des Trägerplattenmodells (1) eingebrachten Abschnitte der Stifte (6a-6d) eine Konturierung aufweisen.

4. Verfahren nach einem der Ansprüche 1 bis 3, **dadurch gekennzeichnet, daß** die Schmelze beim Erstarren einen Eisenguß mit Vermiculargraphit bildet.

5. Belagträgerplatte mit einer Metallguß-Grundplatte mit einer Trägerfläche zur Aufnahme einer Reibbelagmasse, wobei aus der Trägerfläche Halteelemente hervorstehen, und wobei die Grundplatte aus Eisenguß hergestellt ist,
**dadurch gekennzeichnet,**
**daß** die Halteelemente Stifte (6a-6d) sind, die in die Grundplatte bei deren Herstellung derart eingegossen werden, daß jeweils ein Abschnitt der Stifte (6a-6d) aus der Trägerfläche der Grundplatte herausragt.

6. Belagträgerplatte nach Anspruch 5, **dadurch gekennzeichnet, daß** die Grundplatte aus Eisenguß mit Vermiculargraphit hergestellt ist.

7. Belagträgerplatte nach Anspruch 5 oder 6, **dadurch gekennzeichnet, daß** die Stifte (6a-6d) derart ausgebildet sind, daß die aus der Grundplatte herausragenden Abschnitte der Stifte (6a-6d) Hinterschneidungen aufweisen.

8. Belagträgerplatte nach einem der Ansprüche 5 bis 7, **dadurch gekennzeichnet, daß** ein bei der Herstellung der Grundplatte eingegossener Abschnitt der Stifte (6a-6d) eine Konturierung aufweist.

9. Verfahren zum Herstellen eines Reibbelags, wobei:
eine Belagträgerplatte nach einem Verfahren nach einem der Ansprüche 1 bis 4 hergestellt wird, und
eine Reibbelagmasse mit einem organischen Bindemittel auf die die Stifte (6a-6d) aufweisende Seitenfläche (5) der Belagträgerplatte aufgepreßt wird.

10. Reibbelag mit einer Belagträgerplatte nach einem der Ansprüche 5 bis 8 und einer Reibbelagmasse, wobei auf die Trägerfläche eine Reibbelagmasse mit einem organischen Bindemittel aufgepreßt ist.

## Claims

1. Method of producing a lining support plate in which:
a) a support plate pattern (1) is prepared, whereby the support plate pattern (1) has on one lateral face (5) which corresponds to the face of the support plate facing a friction lining a plurality of recesses (6) into each of which a pin (6a - 6d) is introduced in such a way that the pin (6a - 6d) partially projects out of the support plate pattern (1);
b) the support plate pattern (1) and the portions of the pins (6a - 6d) projecting out of the support plate pattern (1) are surrounded by a moulding compound (7),
the moulding compound (7) is compressed and/or cured,
the support plate pattern (1) is removed from the cured and/or compressed moulding compound (7) in such a way that the pins (6a - 6d) with the portions projecting out of the support plate pattern (1) remain in the moulding compound (7) and a support plate casting cavity (8) is formed into which the pins (a - 6d) protrude;
c) a melt is poured into the support plate casting cavity (8), whereby the portions of the pins (6a - 6d) protruding into the support plate casting cavity (8) are surrounded by the melt;
d) the melt is left to solidify in such a way that a cast iron lining support plate is formed; and
e) the lining support plate is removed from the mould.

2. Method as claimed in Claim 1, wherein the pins (6a - 6d) introduced into the support plate pattern (1) are constructed in such a way that the portions of the pins (6a - 6d) projecting out of the support plate pattern (1) have undercuts.

3. Method as claimed in any one of Claims 1 or 2, wherein the portions of the pins (6a - 6d) introduced into the recesses in the support plate pattern (1) are contoured.

4. Method as claimed in any one of Claims 1 to 3, **characterised in that** when the melt solidifies it forms a cast iron with vermicular graphite.

5. Lining support plate with a cast metal base plate with a support surface to receive a friction lining material, wherein retaining elements project out of the support surface and wherein the base plate is made from cast iron, **characterised in that** the retaining elements are pins (6a - 6d) which are cast into the base plate during production thereof in such a way that in each case a portion of the pins (6a - 6d) projects out of the support surface of the base plate.

6. Lining support plate as claimed in Claim 5, **characterised in that** the base plate is produced from cast iron with vermicular graphite.

7. Lining support plate as claimed in Claim 5 or 6, **characterised in that** the pins (6a - 6d) are constructed in such a way that the portions of the pins (6a - 6d) projecting out of the base plate have undercuts.

8. Lining support plate as claimed in any one of Claims 5 to 7, **characterised in that** a portion of the pins (6a - 6d) cast into the base plate during production thereof is contoured.

9. Method of producing a friction lining, in which a lining support plate is produced according to a method as claimed in any one of Claims 1 to 4, and a friction lining material with an organic binder is pressed onto the lateral surface (5) of the lining support plate having the pins (6a - 6d).

10. Friction lining with a lining support plate as claimed in any one of Claims 5 to 8 and a friction lining material, wherein a friction lining with an organic binder is pressed onto the support surface.

## Revendications

1. Procédé de fabrication d'une plaque de support de garniture, dans lequel :
a) on prépare un modèle (1) de plaque de support, le modèle (1) de plaque de support présentant plusieurs découpes (6) sur une surface latérale (5) qui correspond à une surface de la plaque de support qui est tournée vers la garniture de frottement, et dans chacune desquelles une tige (6a - 6d) est insérée de telle sorte que la tige (6a - 6d) déborde en partie du modèle (1) de plaque de support,
b) le modèle (1) de plaque de support et la partie des tiges (6a - 6d) qui déborde du modèle (1) de plaque de support sont englobés dans une pâte de moulage (7),
la pâte de moulage (7) est compactée et/ou durcie,
le modèle (1) de plaque de support est retiré de la pâte de moulage (7) compactée et/ou durcie de telle sorte que la partie des tiges (6a - 6d) qui déborde du modèle (1) de plaque de support reste dans la pâte de moulage (7) et que soit formé un espace creux (8) de coulée de plaque de support dans lequel les tiges (6a - 6d) pénètrent,
c) une matière fondue est coulée dans l'espace creux (8) de coulée de plaque de support, la partie des tiges (6a - 6d) qui pénètre dans l'espace creux (8) de coulée de plaque de support étant englobée dans la matière fondue,
d) la matière fondue est solidifiée de manière à former une plaque en fonte de support de garniture et
e) la plaque de support de garniture est enlevée du moule.

2. Procédé selon la revendication 1, dans lequel les tiges (6a - 6d) introduites dans le modèle (1) de plaque de support sont configurées de telle sorte que la partie des tiges (6a - 6d) qui déborde du modèle (1) de plaque de support présente des contre-dépouilles.

3. Procédé selon les revendications 1 ou 2, dans lequel la partie des tiges (6a - 6d) introduite dans les découpes ménagées dans le modèle (1) de plaque de support présente un contour.

4. Procédé selon les revendications 1 à 3, **caractérisé en ce que** la matière fondue forme une fonte à graphite vermiculaire lors de sa solidification.

5. Plaque de support de garniture dotée d'une plaque de base en métal coulé dont une surface de support sert à reprendre une pâte de garniture de frottement, dans laquelle des éléments de maintien débordent de la surface de support, la plaque de support étant fabriquée en fonte, **caractérisée en ce que** les éléments de maintien sont des tiges (6a - 6d) qui sont incorporées dans la plaque de base lors de sa fabrication de telle sorte qu'une partie de chaque tige (6a - 6d) déborde de la surface de support de la plaque de base.

6. Plaque de support de garniture selon la revendication 5, **caractérisée en ce que** la plaque de base est fabriquée en fonte à graphite vermiculaire.

7. Plaque de support de garniture selon les revendications 5 ou 6, **caractérisée en ce que** les tiges (6a - 6d) sont configurées de telle sorte que la partie des tiges (6a - 6d) qui déborde de la plaque de base présente des contre-dépouilles.

8. Plaque de support de garniture selon l'une des revendications 5 à 7, **caractérisée en ce que** la partie des tiges (6a - 6d) incorporée dans la plaque de base lors de sa fabrication présente un contour.

9. Procédé de fabrication d'une garniture de frottement, dans lequel on fabrique une plaque de support de garniture de frottement par un procédé selon l'une des revendications 1 à 4 et dans lequel on presse une pâte de garniture de frottement dotée d'un liant organique sur la surface latérale (5) de la plaque de support de garniture qui présente des tiges (6a - 6d).

10. Garniture de frottement dotée d'une plaque de support de garniture selon l'une des revendications 5 à 8 et d'une pâte de garniture de frottement dans laquelle une pâte de garniture de frottement dotée d'un liant organique est pressée sur une surface de support.
